# EUROPEAN PATENT APPLICATION

(11) **EP 2 775 115 A1**
(43) Date of publication of application: **10.09.2014**
(21) Application number: 13425032.3
(22) Date of filing: 04.03.2013
(51) Int. Cl.: F01N 13/08, F01N 13/04, F02B 75/22, F02B 27/04, B60K 13/04, B62K 11/04

(54) **Exhaust system for two-cylinder engines of motorcycles**

(71) Applicant: FM Projects S.R.L., 14020 Settime (AT) (IT)
(72) Inventor: Musso, Simone, 14020 Settime (AT) (IT)
(74) Representative: Garavelli, Paolo

(57) **Abstract**

An exhaust system (1) for two-cylinder engines (7) of motorcycles is described, and comprises: a first and a second outlet tubes (3, 5) of exhaust gases of the engine (7); a tangent compensating element (9) made by mutually connecting the first and the second outlet tubes (3, 5) so that they share the same passage sections (11, 13) of exhaust gases with a double area with respect to that of the outlet tubes (3, 5); a first and a second connection tubes (15, 16) connected downstream of the tangent compensating element (9); a first and a second silencing elements (18, 20) connected to the first and the second connection tubes (15, 16) and that are adapted to perform a direct exhaust of gases from the first and second connection tubes (15, 16) towards the outside along the flow direction A of the exhaust gases; moreover, the first silencing element (18) and the second silencing element (20) are placed below the motorcycle oil sump, namely are placed between the oil sump and the ground.

## Description

The present invention refers to an exhaust system for two-cylinder engines of motorcycles, in particular motorcycles manufactured by company Ducati S.p.A. with the commercial name "Ducati 1199 Panigale".

Exhaust systems for two-cylinder engines of motorcycles are currently known and are placed so that their related silencing elements are located substantially below the driver's seat.

Such exhaust systems are equipped with tubes with a great diameter (greater than 70 mm) and, due to the narrow space available in which the exhaust system itself must be placed, are made with complex and encumbrant configurations: the final result is that the outlet power of the motorcycle on which they are applied is not satisfactory and could be greatly improved.

In order to partially solve such problem, silencing elements have been made, which are equipped therein with two-way serpentine "paths", in which the engine exhaust gases are made pass, in order to improve the global motorcycle yield. However, such silencing elements, in which there is not a "direct" exhaust passage of gas from their inlet to their outlet, have the problem that, after a short operating time, the exhaust gases overheat the silencer interior, damaging (and in practice "opening") the internal serpentine paths and ruining the whole silencing element.

Therefore, object of the present invention is solving the above prior art problems, by providing an exhaust system for two-cylinder engines of motorcycles, which allows substantially reducing both the diameter of the various exhaust tubes involved, taking it currently, for known motorcycle models, to values of 60.3 mm for the Ducati 1199 Panigale motorcycle or of 63.5 mm for motorcycles of a similar type, and which allows making exhaust tubes whose thickness is approximately 1 mm, further reducing the weight of the exhaust system, making its installation easier on a vehicle such as a motorcycle, where spaces and encumbrances are very limited, and anyway obtaining an outlet power which is far greater than the one of motorcycles equipped with traditional exhaust systems.

A further object of the present invention is providing an exhaust system like the one shown above, which is adapted to be placed below the engine oil sump, and which has silencing elements inside which the exhaust gases move along a straight path from their inlet to their outlet towards outside. This configuration allows greatly improving the outlet power of the motorcycle engine, increasing at the same time its efficiency.

The above and other objects and advantages of the invention, as will result from the following description, are obtained with an exhaust system for two-cylinder engines of motorcycles like the one claimed in claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as appears from the enclosed claims.

The present invention will be better described by some preferred embodiments thereof, provided as a nonlimiting example, with reference to the enclosed drawings, in which:

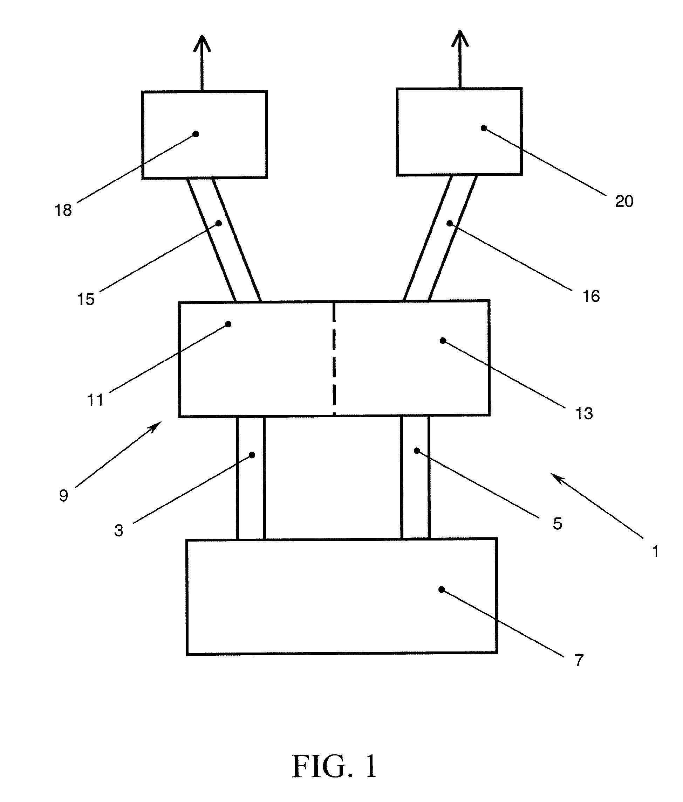

- Figure 1 is a schematic block diagram of the main components of the exhaust system of the present invention; and
- Figures 2 to 5 are perspective views of a preferred embodiment of the exhaust system of the present invention applied to a motorcycle of the Ducati 1199 Panigale type.

With reference to the Figures, a preferred (but absolutely not limiting) embodiment of the exhaust system 1 of the present invention is show, such system being preferably adapted to be used on two-cylinder engines 7 of motorcycles. The invention will be described and shown with reference to the solution currently deemed preferred, for a motorcycle of the Ducati 1199 Panigale type, but obviously the concepts and the structure of the inventive exhaust system could be applied equally well to any motorcycle equipped with two-cylinder engines.

The exhaust system 1 of the invention substantially comprises:
- a first and a second outlet tubes 3, 5 for the exhaust gases of the engine 7, respectively connected to the first and the second outlet (not shown) of each one of the cylinders (not shown) of the engine 7;
- a tangent compensating element 9 made by mutually connecting, laterally with respect to their longitudinal axis, the first outlet tube 3 and the second outlet tube 5, so that they share the same passage section 11, 13 for the exhaust gases, such passage section 11, 13 having an area approximately double with respect to the sectional area of each one of the outlet tubes 3, 5;

- a first and a second connection tube 15, 16, connected downstream of the tangent compensating element 9 at a first end thereof;
- a first silencing element 18, connected to the first connection tube 15 at a second end thereof opposite to the first end, the first silencing element 18 being adapted to perform a direct exhaust of the gases from the first connection tube 15 towards outside along the flow direction A of the exhaust gases; and
- a second silencing element 20, connected to the second connection tube 16 at a second end thereof opposite to the first end, the second silencing element 16 being adapted to perform a direct exhaust of the gases from the second connection tube 16 towards the outside along direction A.

Moreover, in order to perform an efficient installation of the exhaust system 1 onto the motorcycle and obtain the objects of the invention, the first silencing element 18 and the second silencing element 20 are placed below the motorcycle oil sump, namely placed between the oil sump and the ground.

In particular, the first silencing element 18 and the second silencing element 20 are placed one on each side of the rear wheel (not shown) of the motorcycle, in a position included between the wheel rotation axis and the ground.

Still in particular, as shown in the Figures, the tangent compensating element 9 is made by cutting a side part of each one of the first outlet tube 3 and the second outlet tube 5, and by mutually welding the two outlet tubes 3, 5 along their respective cut parts.

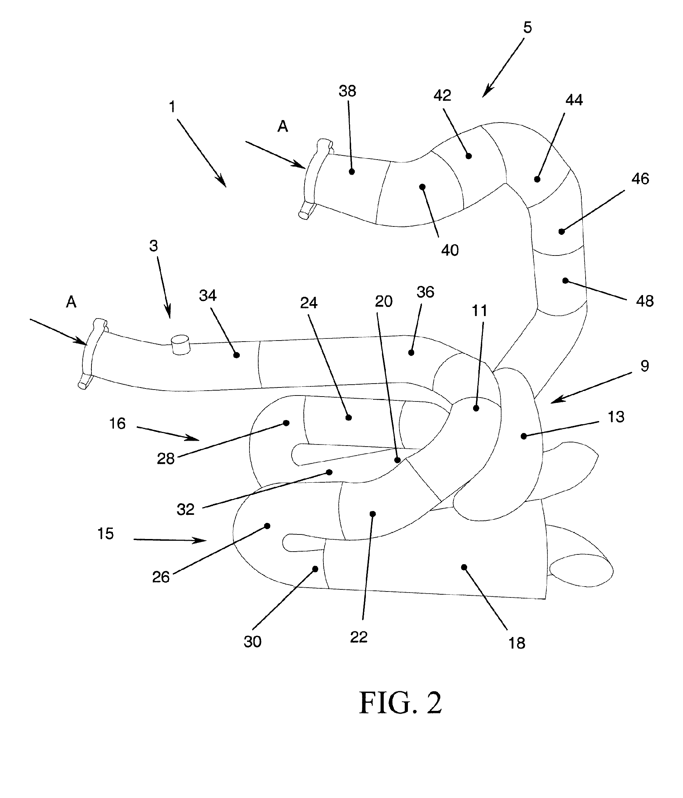

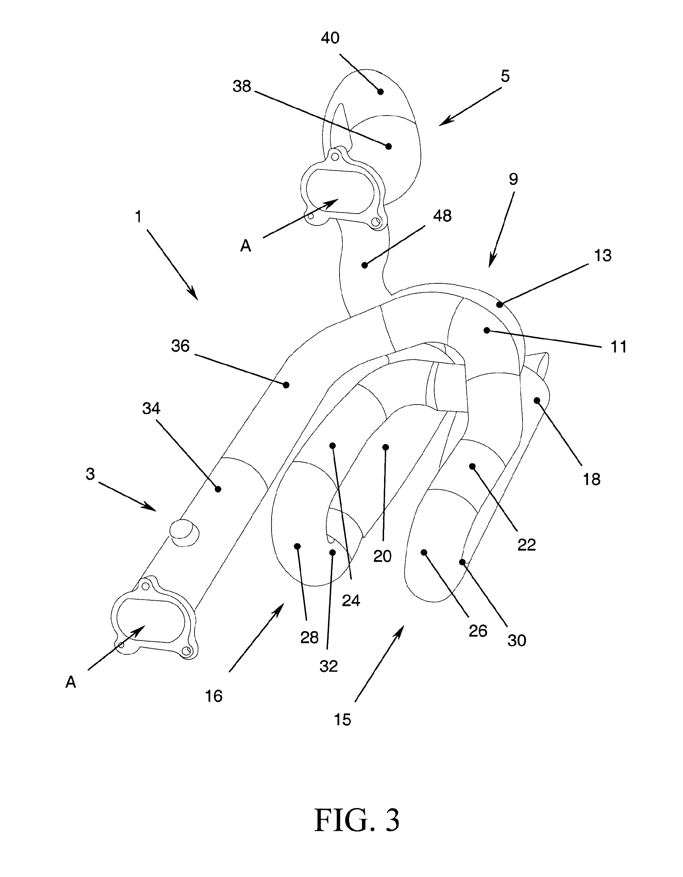

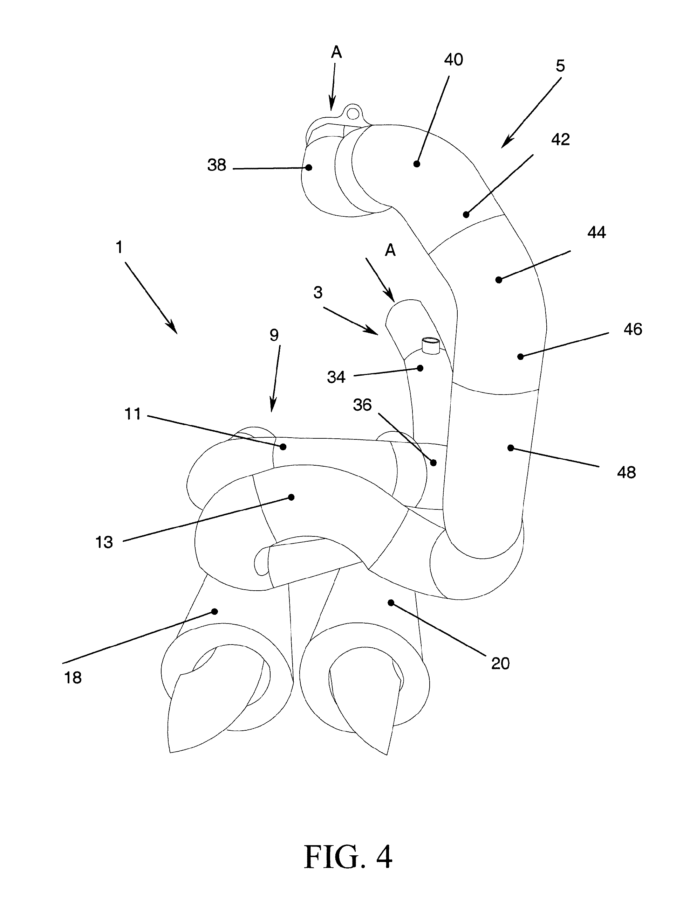

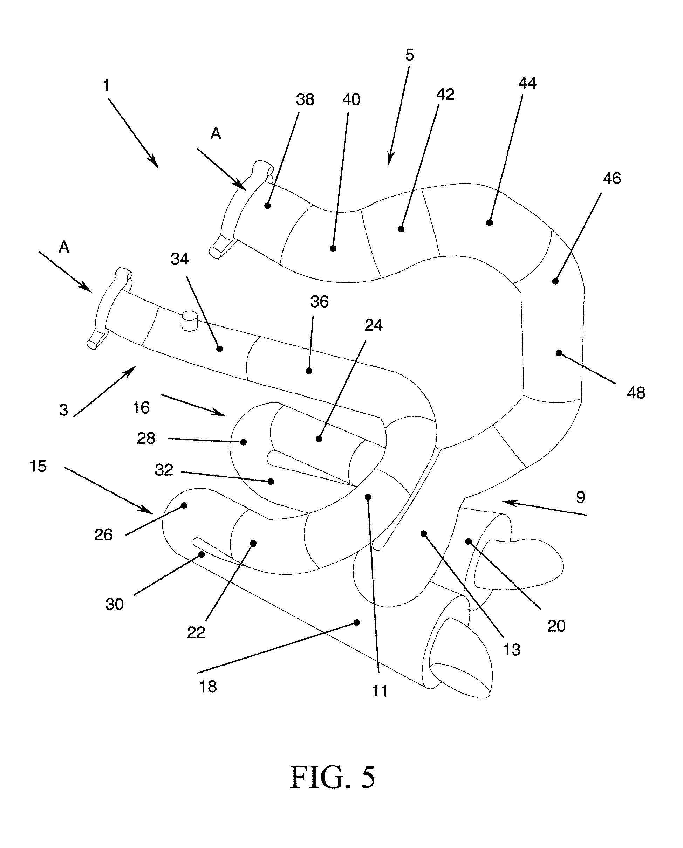

According to the preferred, but not limiting, embodiment shown in Figures 2 to 5 for an exhaust system 1 to be applied to the Ducati 1199 Panigale motorcycle, the first connection tube 15 and the second connection tube 16 are each composed, along the flow direction A of the exhaust gases, of a first section 22, 24, initially curved and then substantially rectilinear (each one of the sections 22, 24 departs from the corresponding passage section 11, 13 of the tangent compensating element 9), of a second section 26, 28, substantially curved by 180°, and of a third, substantially rectilinear section 30, 32.

Moreover, always according to the shown embodiment, the first inlet tube 3, along the flow direction A of the exhaust gases, is composed of a first, substantially rectilinear section 34, and a second section 36, initially rectilinear and then substantially shaped in a curved way, to be then connected to the passage section 11 (substantially curved by 180°) of the tangent compensating element 9.

And finally, always according to the shown embodiment, the second inlet tube 5, along the flow direction A of the exhaust gases, is composed of a first, substantially rectilinear section 38, a second section 40 curved by about 45°, a third, substantially rectilinear section 42, a fourth section 44 curved by about 45°, a fifth, substantially rectilinear section 46, and a sixth section 48, curved by about 45°, to be then connected to the passage section 13 (substantially curved by 180°) of the tangent compensating element 9.

With the described arrangement, it is possible to substantially reduce the diameter of the various exhaust tubes involved, taking it currently, for known motorcycle models, to values of 60.3 mm for the Ducati 1199 Panigale motorcycle or of 63.5 mm for motorcycles of a similar type, and it is further possible to make exhaust tubes whose thickness is approximately 1 mm, further reducing the weight of the exhaust system, making its installation easier on a vehicle such as a motorcycle, where spaces and encumbrances are very limited, and anyway obtaining an outlet power which is far greater than the one of motorcycles equipped with traditional exhaust systems.

Summarising, the inventive system is useful for a two-cylinder 4-way engine, specifically for the Ducati 1199 Panigale model, and is adapted to be installed, among other models, also on:
- Ducati 1199 Panigale base
- Ducati 1199 Panigale S
- Ducati 1199 Panigale R
- Ducati 1199 Panigale superbike

At layout level, the exhaust system can be installed on a wide range of two-cylinder four-way motorcycles, performing modifications related to overall sizes and curves/flanges of "head outlets".

The exhaust system can change its volumetry, adapting it to engine performance differences, replacing the tube diameter, which can range from 54 mm external to 72 mm external.

The tube thickness can range from 0.8 mm to 1.5 mm maximum.

Such tube can be made of several materials, such as:
- Stainless steel: Aisi 304; Aisi 306; Aisi 316; Aisi 321;
- Titanium, hardness grade 1 to 9
- Inconel

The head outlet of the front/horizontal cylinder is flanged on the exhaust opening of the cylinder and end next to the slit of the right fairing: here, the fron cylinder curve is connected.

The head outlet of the rear/vertical cylinder is flanged onto the exhaust opening of the cylinder and ends next to the driver's right footboard; here, the rear cylinder curve is connected.

The front/horizontal cylinder curve is placed on the right engine side and runs along the whole slit present on the fairing flank, ending in the top right reat part of the engine oil sump/carter, allowing the connection of the compensator 9.

The rear/vertical cylinder curve is placed between the driver's right footboard and the right fork side, and ends in the lower fork part, allowing the connection of the compensator 9.

The compensator 9 (major part of the exhaust system) is placed in the part below the rear suspension, and "tangentially" communicates the tubes 3, 5 (curves) coming from the horizontal and vertical cylinders. In such a way, the exhaust gases flow coming from the engine is deviated inside the two fittings of the silencing elements 18, 20 coupled with the compensator 9.

The two fitting curves for compensator 9 / silencers 18, 20 allow positioning them in the lower part of the motorcycle, and more precisely on the right and left parts of the oil sump, further allowing the silencers 18, 20 to be connected to, and "copy" the slits/openings present in the fairing flanks.

The silencers 18, 20 are of the "direct exhaust" type with front inlet and rear outlet, and can be made of different materials (carbon, titanium, stainless steel), and also have different shapes.

Purpose of this exhaust system is having maximum performance efficiency, though not changing the motorcycle outside and aesthetic appearance, and its assembling does not imply modifications of structural and original parts.

Some preferred embodiments of the present invention have been previously shown and described: obviously, numerous variations and modifications, functionally equivalent to the previous ones, will readily appear for the skilled people in the art, and will fall within the scope of the invention as pointed out by the enclosed claims.

## Claims

1. Exhaust system (1) for two-cylinder engines (7) of motorcycles **characterised in that** it comprises:
- a first and a second outlet tubes (3, 5) of exhaust gases of the engine (7), respectively connected to the first and the second outlet of each one of the cylinders of the engine (7);
- a tangent compensating element (9) made by mutually connecting, laterally with respect to their longitudinal axis, the first outlet tube (3) and the second outlet tube (5) so that they share a same passage section (11, 13) for exhaust gases, such passage section (11, 13) having an area approximately double with respect to the sectional area of each one of the outlet tubes (3, 5);
- a first and a second connection tube (15, 16) connected downstream of the tangent compensating element (9) at a first end thereof;
- a first silencing element (18) connected to the first connection tube (15) at a second end thereof opposite to the first end, the first silencing element (18) being adapted to perform a direct exhaust of the gases from the first connection tube (15) towards the outside along a flow direction A of the exhaust gases; and
- a second silencing element (20) connected to the second connection tube (16) at a second end thereof opposite to the first end, the second silencing element (16) being adapted to perform a direct exhaust of the gases from the second connection tube (16) towards the outside along the flow direction A of the exhaust gases; and **in that**:
- the first silencing element (18) and the second silencing element (20) are placed below a motorcycle oil sump, namely are placed between the oil sump and the ground.

2. Exhaust system (1) according to claim 1, **characterised in that** the first silencing element (18) and the second silencing element (20) are placed one on each side of the rear motorcycle wheel, in a position included between the rotation axis of the wheel and the ground.

3. Exhaust system (1) according to claim 1 or 2, **characterised in that** the tangent compensating element (9) is made by cutting a side part of each one of the first outlet tube (3) and the second outlet tube (5) and by mutually welding the two outlet tubes (3, 5) along their respective cut parts.

4. Exhaust system (1) according to any one of the previous claims, **characterised in that** the first connection tube (15) and the second connection tube (16) are each composed, along the flow direction A of the exhaust gases, of a first section (22, 24), initially curved and then substantially rectilinear, each one of the sections (22, 24) departing from the corresponding passage section (11, 13) of the tangent compensating element (9), of a second section (26, 28), substantially curved by 180°, and of a third, substantially rectilinear section (30, 32).

5. Exhaust system (1) according to any one of the previous claims, **characterised in that** the first inlet tube (3), along the flow direction A of the exhaust gases, is composed of a first, substantially rectilinear section (34) and of a second section (36), initially rectilinear and then shaped as a curve, to be then connected to the passage section (11) of the tangent compensating element (9).

6. Exhaust system (1) according to any one of the previous claims, **characterised in that** the second inlet tube (5), along the flow direction A of the exhaust gases, is composed of a first, substantially rectilinear section (38), of a second section (40), curved by about 45°, a third, substantially rectilinear section (42), a fourth section (44), curved by about 45°, a fifth, substantially rectilinear section (46), and a sixth section (48), curved by about 45°, to be then connected to the passage section (13) of the tangent compensating element (9).
